# EUROPÄISCHE PATENTSCHRIFT

(11) **EP 3 224 022 B1**
(45) Veröffentlichungstag und Bekanntmachung des Hinweises auf die Patenterteilung: **18.03.2020**
(21) Anmeldenummer: 15801406.8
(22) Anmeldetag: 26.11.2015
(51) Int. Cl.: B29C 64/106, B29C 64/40, B33Y 30/00, B33Y 40/00

(54) **VORRICHTUNG ZUR AUSBILDUNG VON VOLUMENKÖRPERN**
DEVICE FOR FORMING 3D BODIES
DISPOSITIF POUR FORMER DES CORPS VOLUMIQUES

(30) Priorität: 26.11.2014 DE 102014224176
(43) Veröffentlichungstag der Anmeldung: 04.10.2017
(73) Patentinhaber: Homag Bohrsysteme GmbH, 33442 Herzebrock-Clarholz (DE)
(72) Erfinder: BETTERMANN, Thomas, 33699 Bielefeld (DE); RASCHE, Niklas, 33378 Rheda-Wiedenbrück (DE)
(74) Vertreter: Hoffmann Eitle
(86) Internationale Anmeldenummer: PCT/EP2015/077756
(87) Internationale Veröffentlichungsnummer: WO 2016/083498

(56) Entgegenhaltungen:
- WO-A1-2014/127426
- WO-A2-2009/057107
- DE-A1- 4 422 146

## Beschreibung

### GEBIET DER ERFINDUNG

Die vorliegende Erfindung betrifft eine Vorrichtung zur Ausbildung von Volumenkörpern, insbesondere von Möbelstücken.

### TECHNISCHER HINTERGRUND DER ERFINDUNG

Es ist die WO 2013/180609 A1 bekannt, die ein Verfahren sowie eine Vorrichtung zum schichtweisen Ausbilden eines Gegenstands betrifft. Das schichtweise Ausbilden von Körpern fällt in den Bereich der generativen Verfahren und kann dem sogenannten 3D-Drucken zugeordnet werden.

Derartige Verfahren erfreuen sich gerade in letzter Zeit einer wachsenden Bedeutung. Die zunehmende Wirtschaftlichkeit und industrielle Anwendbarkeit lässt das 3D-Drucken bei der Prototypenentwicklung eine immer wichtigere Rolle einnehmen. Auch im Bereich individueller Fertigung bieten die Möglichkeiten des 3D-Druckens interessante Perspektiven. Dies betrifft vor allem auch Prototypen und Einzelanfertigungen von Möbelstücken und anderen Elementen aus der Bauelementeindustrie.

Wie in der oben angeführten Schrift beispielhaft verdeutlicht, finden hierfür z.B. Holzstaub bzw. Holzspäne Verwendung, die mit einem Bindemittel versetzt werden und dann in einem additiven Herstellungsprozess zum Aufbau eines Volumenkörpers herangezogen werden.

Um in einem solchen 3D-Druckverfahren auch komplizierte Geometrien ausbilden zu können, sieht beispielsweise die DE 10 2011 106 614 A1 einen bewegbaren Objektträger vor, auf dem der Volumenkörper ausgebildet wird. Dabei wird die Bewegung des Objektträgers gegenüber einer bevorzugt festen Auftragungseinheit gesteuert, mit der Material auf den Volumenkörper appliziert wird. Dadurch ist es möglich, Volumenkörper mit komplizierten Geometrien wie etwa Hinterschneidungen und Überhängen auszubilden.

Gerade die Ausbildung von Möbelstücken und anderen Elementen der Bauelementeindustrie stellt allerdings besondere Anforderungen an die entsprechende Vorrichtung. So sind gängige Möbelstücke oder andere Bauelemente häufig voluminös und entsprechend gewichtig. Dies erschwert den Aufbau eines Volumenkörpers durch Relativbewegung des Objektträgers deutlich, da die Last des wachsenden Volumenkörpers die Mechanik zur Bewegung des Objektträgers belastet. Ferner unterliegen solche Vorrichtungen Einschränkungen hinsichtlich der Größe des auszubildenden Volumenkörpers.

Ferner müssen diese 3D-Druckvorrichtungen zusätzlich zu bereits bestehenden Systemen zur Nachbearbeitung des Volumenkörpers angeschafft werden, was die Kosten des Maschinenparks entsprechend in die Höhe treibt.

Eine derartige Nachbearbeitung kann beispielsweise in dem Anleimen eines Kantenmaterials bestehen, für welchen Zweck beispielsweise die EP 2 332 718 A2 ein Fünfachsbearbeitungszentrum mit einem Anleimaggregat offenbart.

Das Dokument WO2014127426 offenbart ein Verfahren zum Gießen von Baumaterial zur Bildung eines Konstruktionselements unter Verwendung einer computergesteuerten Vorrichtung, wobei die Vorrichtung einen Materialauftragskopf aufweist, der mit einem Reservoir von Auftragsmaterial in Verbindung steht und in Reaktion auf Computeranweisungen innerhalb eines Bauvolumens bewegbar ist.

### DARSTELLUNG DER ERFINDUNG

Der vorliegenden Erfindung liegt folglich die Aufgabe zugrunde, eine Vorrichtung bereit zu stellen, die in der Lage ist, geometrisch komplexe Volumenkörper, wie Möbelstücke und andere Elemente der Bauelementeindustrie durch ein additives Herstellungsverfahren zu erzeugen, und zwar unter möglichst wirtschaftlicher Umsetzung.

Hierzu stellt die vorliegende Erfindung eine Vorrichtung gemäß Anspruch 1 bereit. Weitere bevorzugte Ausführungsformen sind in den abhängigen Ansprüchen angeführt.

Gemäß einem Aspekt der vorliegenden Erfindung weist die Vorrichtung zur Ausbildung von Volumenkörpern, insbesondere von Möbelstücken, durch additiven Materialauftrag auf: einen Träger, auf dem der Volumenkörper ausgebildet wird, eine Auftragungseinheit zum Aufbau des Volumenkörpers auf dem Träger durch additiven Auftrag von Material, wobei das Material insbesondere teilweise aus Holzmaterial, wie Holzschaum, Holzmehl, Sägespäne oder ähnlichem, einer metallischen oder mineralischen Paste oder Kunststoff ausgebildet ist, und einen Werkzeugträger mit einer Werkzeugaufnahme, in welcher Werkzeugaufnahme die Auftragungseinheit aufgenommen ist. Dabei ist der Werkzeugträger derart ausgestaltet, dass die in der Werkzeugaufnahme aufgenommene Auftragungseinheit durch Verfahren der Werkzeugaufnahme bezogen auf den Träger in fünf Richtungen ausgerichtet werden kann.

"In fünf Richtungen ausgerichtet werden kann" heißt mit anderen Worten, dass die in der Werkzeugaufnahme aufgenommene Auftragungseinheit (durch Verfahren der Werkzeugaufnahme bezogen auf den Träger) entlang bzw. um fünf Achsen, also in fünf unterschiedliche Richtungen bewegt werden kann.

Die "Auftragungseinheit" im Sinne dieser Anmeldung ist auf jedwede Einheit bzw. Einrichtung gerichtet, mit der ein additives Verfahren zur Ausbildung von Volumenkörpern durchgeführt werden kann.

Der Begriff "Volumenkörper" ist dabei als ein struktureller Körper zu verstehen, dessen Dimensionen über eine Beschichtung bestehend aus einem flüssigen oder festen Beschichtungsmaterial oder eine bedruckte Oberfläche hinausgehen. Insbesondere soll der Volumenkörper eine Dicke von mindestens 500µm aufweisen.

Die Ausrichtung der Auftragungseinheit bezüglich des Volumenkörpers in fünf Richtungen gewährleistet, dass auch sonst unzugängliche Stellen an bereits ausgebildeten bzw. gedruckten Abschnitten des Volumenkörpers erreicht werden können, sodass auch komplexe Geometrien mit Hinterschneidungen und Überhängen ausgebildet werden können. Die Ausrichtung in fünf Freiheitsgraden ermöglicht ferner eine hochflexible Vorrichtung, die Volumenkörper verschiedenster Größen einfach aufbauen kann.

Die erfindungsgemäße Vorrichtung hat ferner den Vorteil, dass der Volumenkörper auf dem Träger ausgebildet wird, und die Auftragungseinheit gegenüber dem Träger (und somit auch gegenüber dem Volumenkörper) ausgerichtet wird. Damit muss, um schwer zugängliche Stellen am Volumenkörper zu erreichen, nicht der vergleichsweise große Träger mit dem möglicherweise schweren Volumenkörper bewegt werden, sondern lediglich die Auftragungseinheit. Dies erhöht die Präzision der Vorrichtung und führt ferner zu günstigeren Maschinenkosten, da entsprechende Mittel zum Bewegen der Vorrichtungen weniger massiv ausgeführt werden müssen. Ferner gestattet dies eine wirtschaftlich sinnvolle Einbindung der Auftragungseinheit in bestehende Fertigungslinien, bei denen der Volumenkörper beispielsweise auf einem Förderband transportiert wird.

Insbesondere handelt es sich bei dem additiven Werkstoff zum Ausbilden von Volumenkörpern um ligninhaltiges Material wie Holzmaterial, insbesondere Holzschaum, Holzmehl, Schleifstaub, Sägespäne, Zellulose oder ähnliches. Ferner kann es sich beim additiven Werkstoff um Metallpasten oder - Schäume, Kunststoffpasten oder -Schäume, pastöses Material oder elektrisch leitende Materialien wie Kupferpaste oder einen elektrisch leitenden Kunststoff bzw. elektrisch leitende Biomaterialien und Bio-Kunststoffe handeln. Eine weitere Alternative ist ein kohlefaserhaltiger Werkstoff. Ferner können thermoplastische, duroplastische oder elastomere Kunststoffe zum Einsatz kommen. Die vorliegende Erfindung ist jedoch nicht auf den Einsatz einer bestimmten Materialart beschränkt. Auch kann das Ausbilden eines Volumenkörpers abschnittsweise mit verschiedenen Materialien erfolgen oder die Materialien werden vor deren Auftrag gemischt. In weiteren Ausführungsformen ist vorgesehen, als Material zum Ausbilden von Volumenkörpern Aluschaum, Kunststoffschaum, usw. zu verwenden, insbesondere zum Ausbilden von Leichtbauplatten.

Gemäß einer bevorzugten Ausführungsform ist der Werkzeugträger derart ausgestaltet, dass ein Materialauftrag durch die in die Werkzeugaufnahme aufgenommene Auftragungseinheit bezogen auf den auf dem Träger auszubildenden Volumenkörper von allen Seiten her und insbesondere von unten bzw. von schräg unten erfolgen kann.

Dies garantiert, dass das aufzutragende Material beispielsweise auch in einem Überhang, wie etwa unter der Sitzfläche eines Stuhls, aufgebracht werden kann. Folglich ist die Flexibilität der Auftragung damit weiter verbessert.

Erfindungsgemäß weist der Werkzeugträger ferner eine Spindeleinheit auf. Dabei erhöht das Vorhandensein der Spindeleinheit die Flexibilität und die Wirtschaftlichkeit der Vorrichtung erheblich, da die erfindungsgemäße Vorrichtung damit auch für weitere Bearbeitungsprozesse mit anderen Bearbeitungswerkzeugen genutzt werden kann, die einer Spindeleinheit bedürfen.

Erfindungsgemäß ist die Werkzeugaufnahme an der Spindeleinheit angeordnet.

Dies gestattet es beispielsweise, die Mittel zur Bewegung bzw. Ausrichtung der Spindeleinheit auch zur Ausrichtung der in der Werkzeugaufnahme angeordneten Auftragungseinheit zu verwenden (und umgekehrt), was die Maschinenkosten weiter reduzieren kann. Erfindungsgemäß ist es dabei, wenn die an der Spindeleinheit angeordnete Werkzeugaufnahme eine Werkzeugaufnahme ist, die derart ausgelegt ist, dass in diese auch andere Bearbeitungswerkzeuge aufgenommen werden können. Anders ausgedrückt ist dann auch die Auftragungseinheit derart ausgelegt, dass sie in die Werkzeugaufnahme der Spindeleinheit aufgenommen werden kann. Dadurch können weitere Nachbearbeitungsprozesse am Volumenkörper einfach ausgeführt werden, wobei auch hier die Bearbeitung an einem geometrisch komplexen Körper möglich ist.

Gemäß einer bevorzugten Ausführungsform der erfindungsgemäßen Vorrichtung ist der Träger in vertikaler Lage fixiert, d.h. bezüglich des Werkzeugträgers nicht nach oben oder unten bewegbar.

Dies vereinfacht einerseits das Layout der Vorrichtung und ermöglicht andererseits eine einfachere Ansteuerung der einzelnen Bauteile, wodurch die erforderliche präzise Steuerung einfacher möglich wird.

Dieses Merkmal schließt dabei ausdrücklich nicht aus, dass der Träger eine Fördereinrichtung umfassen kann, mit welcher der fertige Volumenkörper beispielsweise zu einer weiteren Bearbeitungsstation oder in ein Zwischenlager transportiert werden kann.

Ferner ist auch ein in einem festen Winkel ausgerichteter Träger bzw. ein vertikal stehender Träger denkbar, an dem der Volumenkörper ausgebildet wird. Die erfindungsgemäße Fünfachstechnik macht dies möglich.

Hinsichtlich der Ausrichtung der Auftragungseinheit bezüglich des Trägers ist vorteilhaft, wenn der Werkzeugträger derart ausgelegt ist, dass die in der Werkzeugaufnahme aufgenommene Auftragungseinheit bezogen auf den Träger in drei lineare Richtungen linear (translatorisch) bewegbar ist und in weitere zwei Richtungen rotatorisch bewegbar ist.

Diese Ausgestaltung hat den Vorteil, dass Ansteuerungssoftware relativ unproblematisch umsetzbar ist. Zusätzlich kann mit der Trennung in translatorische und rotatorische Freiheitsgrade gewährleistet werden, dass selbst große Volumenkörper von der Vorrichtung ausgebildet werden können, ohne mit den Strukturen des Werkzeugträgers zu interferieren.

Gemäß einer bevorzugten Ausführungsform ist der Werkzeugträger ein kardanischer Fünfachsspindelkopf oder ein kartesischer Fünfachsspindelkopf.

Beide Ausführungsformen haben den Vorteil, dass die Auftragungseinheit relativ einfach in eine Fünfachsanordnung implementiert werden kann. Dies ermöglicht ferner die einfache Kombination und Integration weiterer Bearbeitungsschritte, wie beispielsweise eines Schleifprozesses zur Veredelung des Volumenkörpers.

Als weitere, bevorzugte Ausführungsform für den Werkzeugträger weist der Werkzeugträger ein Trägersystem und einen Kopf auf, wobei die Werkzeugaufnahme an dem Kopf angebracht ist, das Trägersystem derart ausgelegt ist, dass es bezogen auf den Träger entlang dreier Achsen verschiebbar ist, und der Kopf derart ausgelegt ist, dass er die in die Werkzeugaufnahme aufgenommene Auftragungseinheit durch Verfahren/Verschwenken der Werkzeugaufnahme bezogen auf den Träger um weitere zwei Achsen bewegen kann.

Der Kopf kann dabei entweder als Spindeleinheit ausgebildet sein oder diese aufweisen. Ist der Kopf als Spindeleinheit ausgebildet, weist diese entsprechend die Werkzeugaufnahme auf.

Der Vorteil dieses Systems liegt zum einen in der robusten und wenig störungsanfälligen Anordnung und zum anderen in der Möglichkeit, das System durch die vorteilhafte Aufteilung der Freiheitsgrade präzise und einfach anzusteuern.

Gemäß einer bevorzugten Ausführungsform weist die Vorrichtung ferner eine Zuführeinrichtung auf, die zur Zuführung des Materials zur Auftragungseinheit mit der Auftragungseinheit verbunden ist, wobei die Zuführeinrichtung einen Extruder, und/oder einen insbesondere beheizbaren Schlauch aufweist.

Die Verwendung einer Zuführeinrichtung hat den Vorteil, dass der Auftragungseinheit fortlaufend Material zugeführt werden kann, wodurch ein additiver Materialauftrag ohne Unterbrechung möglich wird. Dabei hat die Bereitstellung eines Extruders den Vorteil, dass das Material gleichmäßig mit definierten Eigenschaften und ohne Unterbrechung aufgebracht werden kann, was insbesondere für die Ausbildung komplexer Geometrien von Vorteil ist. Der Schlauch eröffnet darüber hinaus die Möglichkeit, die Zuführung beheizbar auszubilden. Dies hat wiederum den Vorteil, dass die Konsistenz des Materials zum additiven Aufbau des Volumenkörpers sehr definiert eingestellt werden kann.

Gemäß einer vorteilhaften Weiterbildung ist die Auftragungseinheit mit dem Extruder über den insbesondere beheizbaren Schlauch verbunden.

Dies eröffnet die Möglichkeit, den Extruder separat von der Auftragungseinheit anzuordnen. Dadurch kann gewährleistet werden, dass die Auftragungseinheit flexibel ausgerichtet werden kann, ohne den Extruder mitführen zu müssen. Damit kann einerseits trotz der Verwendung des Extruders eine kompakte Auftragungseinheit realisiert werden. Andererseits wird die Ausrichtung der Auftragungseinheit nicht durch den möglicherweise schweren Extruder beeinträchtigt.

Bevorzugt ist dabei, dass der Extruder derart an der Vorrichtung angebracht ist, dass er beim Ausrichten der Auftragungseinheit lediglich entlang der drei linearen Richtungen bewegt wird.

Dadurch, dass der Extruder derart in die Vorrichtung integriert ist, dass er lediglich entlang der drei linearen Richtungen bewegt wird (also nicht zusammen mit der Werkzeugaufnahme um die verbleibenden zwei rotatorischen Achsen verschwenkbar ist), wird sichergestellt, dass der vergleichsweise schwere Extruder die Ausrichtung der Auftragungseinheit um die rotatorischen Achsen nicht behindert.

Beispielsweise gelingt dies dadurch, dass der Extruder an dem oben erwähnten Trägersystem angebracht ist. Da das Trägersystem derart ausgelegt ist, dass es bezogen auf den Träger entlang dreier Achsen verschiebbar ist, heißt dies folglich, dass der Extruder zusammen mit dem Trägersystem bezogen auf den Träger entlang dreier Achsen verschiebbar ist. Was die translatorischen Richtungen (linearen Verschiebungen) angeht, bewegt sich der Träger somit zusammen mit dem Trägersystem. Dies hält die Versorgungswege für das Material zum additiven Aufbau des Volumenkörpers kurz.
Der stellt der Schlauch ein flexibles Verbindungselement dar, das die Ausrichtung der Auftragungseinheit relativ zum Extruder nicht beeinträchtigt.

Gemäß einer bevorzugten Weiterbildung weist die Zuführeinrichtung ferner einen Zwischenspeicher zur Zwischenspeicherung des Materials auf. Dabei ist der Zwischenspeicher bevorzugt derart an der Vorrichtung angebracht, dass er beim Ausrichten der Auftragungseinheit lediglich entlang der drei linearen Richtungen bewegt wird. Ist ein Extruder vorhanden ist der Zwischenspeicher dem Extruder bevorzugt vorgeschaltet.

Durch die bevorzugte Anordnung des Zwischenspeichers derart, dass er beim Ausrichten der Auftragungseinheit lediglich entlang der drei linearen Richtungen bewegt wird, kann verhindert werden, dass der ggf. schwere und voluminöse Zwischenspeicher insbesondere die rotatorische Ausrichtung der Auftragungseinheit behindert. Dies fördert somit die Fähigkeit der Vorrichtung, Volumenkörper komplexer Geometrie auszubilden.

Der Zwischenspeicher kann dabei als eine Art Material-Puffer dienen, der gewährleistet, dass der Auftragungseinheit beständig Material zur Verfügung steht. Dies ist gerade bei komplexen Volumenkörpern wichtig, da somit sichergestellt werden kann, dass gerade geometrisch komplizierte Stellen "in einem Zug" ohne Absetzten ausgebildet werden können, was ggf. Spannungen im Volumenkörper reduzieren kann. Zusätzlich können gleichbleibende Materialeigenschaften für den gesamten Volumenkörper sichergestellt werden.

Sollen für den Volumenkörper verschiedene Materialarten verwendet werden, kann ferner eine zweite Zuführeinrichtung für ein zweites Material vorgesehen sein, welche zweite Zuführeinrichtung über eine separate Verbindung zu der Auftragungseinheit verfügen kann. Dadurch wird es möglich, den Volumenkörper partiell aus unterschiedlichen Materialien auszubilden, was die Ausbildung komplexer Geometrien weiter fördern kann.

Gemäß einer bevorzugten Ausführungsform weist die Auftragungseinheit eine oder mehrere Düsen auf.

Die Düse steht beispielsweise mit der Zuführeinrichtung in Verbindung. Insbesondere kann die Düse mit dem Schlauch in Verbindung stehen, oder das Ende des Extruders bilden. Sind mehrere Düsen vorhanden, erlaubt dies den additiven Materialauftrag von unterschiedlichen Materialien, ohne die Werkzeugbestückung der Vorrichtung ändern zu müssen. So können beispielsweise mit einer Vorrichtung (ggf. metallische) Strukturen wie Leiterbahnen oder Beschläge aufgebaut werden, die dann sukzessive in den Volumenkörper eingebettet werden. Dabei kann jede Düse je nach Bedarf eine eigene Zuführeinrichtung (d.h., z.B. entsprechende Schläuche, Extruder, Speichereinrichtungen, Schneckenförderer etc.) aufweisen.

Wie bereits erwähnt, sind sowohl die Auftragungseinheit als auch die Werkzeugaufnahme bevorzugt derart ausgestaltet, dass die Auftragungseinheit in die Werkzeugaufnahme einwechselbar ist. Dies kann insbesondere aus einem Werkzeugspeicher erfolgen, der gleichfalls in der Vorrichtung angeordnet sein kann.

"Einwechselbar" bzw. "auswechselbar" heißt dabei, dass ein Auswechseln bzw. Einwechseln der Auftragungseinheit ohne zusätzliche Demontagearbeiten und insbesondere auch autonom von der Vorrichtung vorgenommen werden kann. Dies ist insbesondere so zu verstehen, dass die Einwechslung und Auswechslung im Maschinentakt erfolgt, ohne den Ausbildungsvorgang des Volumenkörpers nennenswert zu unterbrechen, was Bearbeitungsvorgänge an einem komplexen Volumenkörper weiter begünstigt.

Zu diesem Zwecke können bekannte Aufnahme- und Verriegelungssysteme wie Schnappverschlüsse oder Magnethalterungen Verwendung finden.

Gemäß einer weiteren bevorzugten Ausführungsform weist die Vorrichtung ferner ein oder mehrere Nachbearbeitungswerkzeuge auf, die in die Werkzeugaufnahme (bevorzugt aus einem Werkzeugspeicher) einwechselbar sind, wobei das/die Nachbearbeitungswerkzeug/e insbesondere aus der Gruppe umfassend einen Inkjet-Druckkopf, ein Fräsaggregat, ein Schleifaggregat, einen Laser oder ein Bohraggregat ausgewählt ist/sind.

Die Flexibilität der erfindungsgemäßen Vorrichtung ist damit nochmals erhöht, da mit ein und derselben Vorrichtung verschiedenste Vorgänge ausgeführt werden können. Dabei kann der Laser insbesondere derart ausgelegt sein, dass er den Volumenkörper partiell erwärmt und so für einen weiteren Materialauftrag vorbereitet. Alternativ kann er auch derart ausgelegt sein, dass er eine Schneidbearbeitung am Volumenkörper ausführt oder Muster bzw. Intarsien am Werkstück aufbringt.

Gemäß einer bevorzugten Weiterbildung weist die Vorrichtung ferner eine Auflagestruktur auf, die an dem Träger angeordnet ist und derart ausgelegt ist, dass sie zumindest Teile des Volumenkörpers beim additiven Materialauftrag abstützt.

"Derart ausgelegt... dass sie... abstützt" heißt in diesem Zusammenhang, dass die Auflagestruktur insbesondere eine geeignete Form hat, um den Volumenkörper abzustützen. Dies hat den Vorteil, dass komplexe Geometrien selbst dann noch handhabbar sind, wenn die Materialeigenschaften des Volumenkörpers die strukturelle Integrität einer bestimmten Struktur bzw. einer Zwischenform nicht mehr gewährleisten könnten. Damit können auch Volumenkörper ausgebildet werden, die ohne die Verwendung von derartigen Auflagestrukturen in einem additiven Herstellungsverfahren nur schwer auszubilden wären. Ferner können die zum Aushärten notwendigen Zeitspannen, bevor ein neuer Materialauftrag erfolgen kann, verkürzt werden.

Dabei ist bevorzugt, dass die Auflagestruktur derart lösbar an dem Träger angeordnet ist, dass sie in die Vorrichtung einwechselbar bzw. auswechselbar ist.

Dieses Merkmal erhöht die Flexibilität der erfindungsgemäßen Vorrichtung nochmals. Beispielsweise wird es dadurch möglich, zunächst eine Auflagestruktur bereitzustellen und diese dann zu entfernen, wenn sie geeignet umbaut ist oder der Volumenkörper ausreichend ausgehärtet ist.

Hierzu ist es vorteilhaft, wenn die Auflagestruktur derart ausgebildet ist, dass sie leicht von dem Volumenkörper entformbar ist.

### KURZE BESCHREIBUNG DER ZEICHNUNGEN

Fig. 1 zeigt eine Draufsicht einer Ausführungsform der Vorrichtung zur Ausbildung von Volumenkörpern gemäß der vorliegenden Erfindung.
Fig. 2 zeigt eine Perspektivansicht einer weiteren Ausführungsform einer Vorrichtung zur Ausbildung von Volumenkörpern gemäß der vorliegenden Erfindung.
Fig. 3 zeigt eine Seitenansicht einer weiteren Ausführungsform einer Vorrichtung zur Ausbildung von Volumenkörpern gemäß der vorliegenden Erfindung und insbesondere eine in der Vorrichtung angeordnete Auflagestruktur.
Fig. 4 zeigt eine Schemadarstellung einer Ausgestaltung einer Zuführeinrichtung in der Vorrichtung zur Ausbildung von Volumenkörpern gemäß der vorliegenden Erfindung.

### AUSFÜHRLICHE BESCHREIBUNG BEVORZUGTER AUSFÜHRUNGSFORMEN DER ERFINDUNG

Bevorzugte Ausführungsformen der vorliegenden Erfindung werden nachfolgend ausführlich mit Bezugnahme auf die begleitenden Zeichnungen beschrieben. Weitere in diesem Zusammenhang genannte Modifikationen können jeweils miteinander kombiniert werden, um neue Ausführungsformen auszubilden.

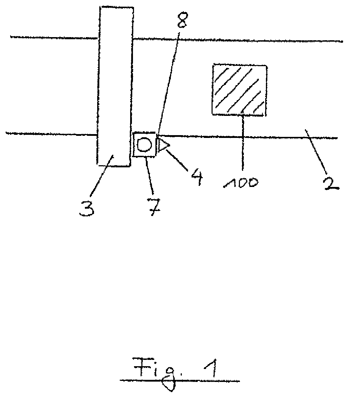

Figur 1 stellt eine schematische Draufsicht einer Ausführungsform einer erfindungsgemäßen Vorrichtung 1 zur Ausbildung von Volumenkörpern 100 dar.

Die Vorrichtung 1 weist einen Träger 2 auf, auf dem der Volumenkörper 100 aufzubauen ist. Erfindungsgemäß wird der Volumenkörper 100 dabei durch additiven Materialauftrag Schritt für Schritt aufgebaut. Für diesen Zweck ist eine Auftragungseinheit 4 vorgesehen, die dafür geeignet ist, eine definierte Materialmenge an einer definierten Position auf dem Träger 2 bzw. dem Volumenkörper 100 aufzubringen.

Die Materialauftragung erfolgt dabei additiv. Das heißt, dass auf bereits aufgetragenes Material sukzessive neues Material aufgegeben wird. Abhängig von der Ausgestaltung des Volumenkörpers 100 ist es dabei vorteilhaft, wenn die Materialauftragung möglichst von allen Seiten des Volumenkörpers 100 her erfolgen kann. Zu diesem Zweck verfügt die erfindungsgemäße Vorrichtung über einen Werkzeugträger 3, der derart ausgelegt ist, dass die in diesem aufgenommene Auftragungseinheit 4 bezüglich des Trägers 2 (und damit auch bezüglich des Volumenkörpers 100) unabhängig in fünf Richtungen verfahren und ausgerichtet werden kann. Dabei ist die Auftragungseinheit 4 in einer entsprechenden Werkzeugaufnahme 8 des Werkzeugträgers 3 aufgenommen. Durch diesen "5-Achs-Werkzeugträger" gelingt beispielsweise auch ein Materialauftrag an dem Volumenkörper 100 von unten bzw. von schräg unten (bezogen auf den Träger 2).

Dies gestattet es, an dem Volumenkörper 100 auch komplexe Strukturen, wie Hinterschneidungen, auszubilden, ohne dass etwa der Träger 2 zusätzlich bezüglich der Auftragungseinheit 4 verfahrbar ausgestaltet sein muss. Letzteres hat den Vorteil, dass die Ansteuerung der Einrichtungen in der Vorrichtung 1 vereinfacht werden kann. Ferner leidet die Bearbeitungspräzision beim Aufbau des Volumenkörpers 100 nicht unter etwaigen Abstimmungsproblemen zwischen den Relativpositionen von Werkzeugträger 3 und Träger 2.

Aus diesem Grund ist der Träger 2 gemäß der vorliegenden Ausführungsform auch bevorzugt in seiner vertikalen Lage fixiert, d.h. nicht bezüglich des Werkzeugträgers 3 nach oben und unten verfahrbar. Vorteilhafterweise kann der Träger 2 allerdings über eine nicht gezeigte Fördereinrichtung, wie etwa ein umlaufendes Band oder einen verfahrbaren Tisch verfügen, die es beispielsweise gestattet, den fertigen Volumenkörper 100 zu transportieren.

Ferner verfügt der Werkzeugträger 3 über eine an sich bekannte Spindeleinheit 7, in die beispielsweise verschiedene (Nach-)Bearbeitungswerkzeuge in eine entsprechende, an der Spindeleinheit angeordnete Werkzeugaufnahme einwechselbar sind. Die an der Spindel angeordnete Werkzeugaufnahme ist dabei derart ausgelegt, dass eine Antriebskraft der Spindel gegebenenfalls an das eingewechselte Werkzeug übertragen werden kann (falls dieses eines Antriebs bedarf).

Dabei ist erfindungsgemäß, dass die Werkzeugaufnahme 8 zur Aufnahme der Auftragungseinheit 4 die Werkzeugaufnahme der Spindeleinheit 7 ist. Die Auftragungseinheit 4 und die Werkzeugaufnahme an der Spindeleinheit 7 sind dann so ausgelegt, dass die Auftragungseinheit 4 anstelle anderer, bekannter (Nach-)Bearbeitungswerkzeuge, in die Spindeleinheit 7 eingewechselt werden kann. Dies bedeutet ferner, dass auch die Werkzeugaufnahme der Spindeleinheit 7 bezogen auf den Träger 2 bzw. den Volumenkörper 100 unabhängig in fünf Richtungen ausgerichtet werden kann. Insgesamt hätte dies den Vorteil, dass die Infrastruktur bestehender System mit 5-Achs-Spindeleinheiten genutzt werden kann. Darüber hinaus könnten der modulare Charakter und die Vielseitigkeit der Vorrichtung bei minimalen Werkzeugkosten weiter gesteigert werden.

Die Ausrichtung in fünf Richtungen kann dann beispielsweise durch die Bereitstellung einer fünfachsigen Spindeleinheit als Spindeleinheit 7 erreicht werden. Dies bedeutet, dass das Spindelgehäuse, welches die Spindel lagert, in drei translatorische Achsen und zwei rotatorische Achsen verfahren werden kann, wobei sich die rotatorische Achse in der vorliegenden Ausführungsform in der Zeichenebene von Figur 1 erstreckt. Der Werkzeugträger ist dann derart ausgestaltet dass er die Ausrichtungen um drei weitere Achsen ermöglicht.

Dies können beispielsweise drei translatorische Achsen sein (Achsen entlang deren eine lineare Bewegung erfolgt). Das translatorische bzw. lineare Verfahren entlang dreier Achsen kann dabei durch die in Figur 1 in der Draufsicht gezeigte Ausgestaltung des Werkzeugträgers 3 bewerkstelligt werden. Der Werkzeugträger 3 weist ein Trägersystem 31 mit einem Führungsbalken 32 auf, der den Träger 2 überspannt und links und rechts des Trägers 2 von entsprechenden Stützen 33 abgestützt wird. Diese Anordnung wird auch Portal genannt. Die Stützen 33 sind bezüglich des Trägers 2 in dessen Längsrichtung verfahrbar. An dem Führungsbalken 32 ist ein Blatt 34 angebracht, das am Führungsbalken 32 bezüglich des Trägers 2 in einer Querrichtung verfahren werden kann. An diesem Blatt 34 sind dann weitere Einrichtungen einschließlich der Auftragungseinheit 4 in einer oben-unten-Richtung bewegbar angeordnet. Alternativ kann auch das Blatt 34 selbst bezüglich des Führungsbalkens 32 in einer Höhenrichtung (oben-unten-Richtung) verfahrbar angeordnet sein. Am Blatt 34 ist dann allgemein eine Anordnung angeordnet, die das Ausrichten der Werkzeugaufnahme 8 um die weiteren zwei Achsen bewerkstelligt. Diese Anordnung wird im Folgenden auch als Kopf 5 bezeichnet. Zu dem vorgenannten Zweck kann der Kopf 5 eine Schwenkachse, einen Schwenkkopf, einen Kugel-Gelenkmechanismus oder dergleichen aufweisen, um welche die Werkzeugaufnahme 8 bzw. u.U. die Spindel der Spindeleinheit 7 schwenkbar ist. Damit ergibt sich insgesamt eine Verfahrmöglichkeit der Auftragungseinheit 4 in insgesamt fünf (unabhängige) Richtungen bezüglich des Trägers 2. Dadurch können für den Volumenkörper 100 freie Formen, wie beispielsweise Kugeln usw. erstellt werden, was die Flexibilität der Vorrichtung erheblich steigert.

Figur 1 stellt eine Ausführungsform dar, bei welcher die Werkzeugaufnahme 8 für die Auftragungseinheit 4, wie oben erwähnt, an der Spindeleinheit 7 angeordnet ist. Alternativ zur Erfindung kann der Werkzeugträger 3 auch eine separate Werkzeugaufnahme 8 für die Auftragungseinheit 4 aufweisen, bzw. die Spindeleinheit kann weggelassen werden (solange auch dann gewährleistet ist, dass die Auftragungseinheit 4 bezogen auf den Träger 2 in fünf Richtungen ausgerichtet werden kann).

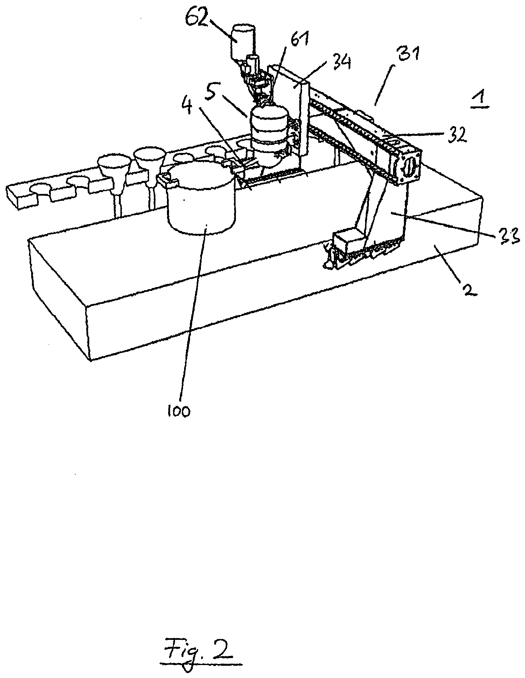

Eine solche Ausgestaltung ist in Figur 2 dargestellt. Hier wird ein ähnlicher Werkzeugträger 3 wie in Figur 1 verwendet. Der Kopf 5 weist allerdings keine Spindeleinheit auf, sondern die Auftragungseinheit wird mittels eines geeigneten Kugelgelenkmechanismus geführt und gehalten, der bezüglich des Trägersystems 31 eine unabhängige Ausrichtung um zumindest zwei rotatorische Achsen ermöglicht.

In den in Figuren 1 und 2 dargestellten Ausführungsformen weist der Werkzeugträger 3 jeweils ein Trägersystem 31 in Portal-Anordnung mit einem Führungsbalken 32 auf, der den Träger 2 überspannt und links und rechts des Trägers 2 an entsprechenden Stützen 33 befestigt ist, die ferner ein Verfahren längs des Trägers 2 ermöglichen. Allerdings kann der Werkzeugträger 3 und damit das Trägersystem 31 auch als freitragender Arm ausgebildet sein, der bezüglich des Trägers 2 verschwenkbar ist und dessen Länge einstellbar ist. Ferner ist auch eine Ausgestaltung mit einem Roboterarm zur Führung der Auftragungseinheit denkbar, der um fünf Achsen bewegbar ist und an dessen Kopf die Auftragungseinheit 4 in einer Werkzeugaufnahme 8 angeordnet ist.

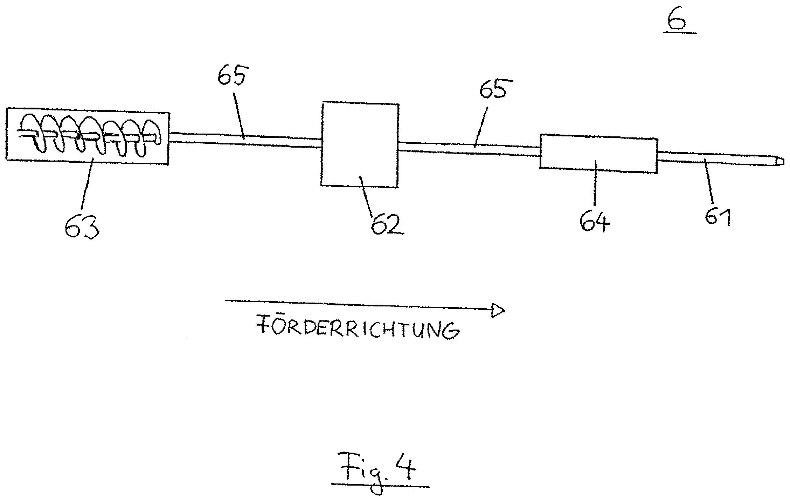

In der in Figur 2 gezeigten Ausführungsform ist die Auftragungseinheit 4 als eine Düse ausgebildet, die in einem als Werkzeugaufnahme 8 dienenden Fortsatz eines Kugelgelenkmechanismus aufgenommen ist. Die Düse steht mit einer Zuführeinrichtung 6 in Verbindung, die zur Zuführung des Materials zur Auftragungseinheit bzw. der Düse ausgelegt ist. Eine detaillierte Beschreibung einer Ausgestaltung dieser Zuführeinrichtung erfolgt weiter unten in Bezugnahme auf Figur 4.

Um die Flexibilität der Vorrichtung weiter zu steigern, ist die Werkzeugaufnahme 8 erfindungsgemäß derart ausgelegt, dass in diese weitere Nachbearbeitungswerkzeuge einwechselbar sind. Zu diesem Zwecke kann ein nicht gezeigter Werkzeugspeicher vorgesehen sein, der die entsprechenden, einzuwechselnden Werkzeuge bereithält. Ein solches Nachbearbeitungswerkzeug kann dabei insbesondere ein Inkjet-Druckkopf zum Bedrucken des Volumenkörpers 100 sein. Dabei kann sowohl ein "herkömmliches" Bedrucken als auch ein Drucken von Funktionsteilen z.B. von Schaltungen vorgesehen sein. Als weiteres Nachbearbeitungswerkzeug kann ferner ein Laser vorgesehen sein. Hinsichtlich des Lasers ist dabei denkbar, dass dieser insbesondere derart ausgestaltet ist, dass er das Material des Volumenkörpers 100 partiell erwärmen und aufweichen kann, was einen weiteren additiven Materialauftrag insbesondere dann begünstigen kann, wenn eine Überhangstruktur auszubilden ist. Darüber hinaus kann der Laser auch derart ausgebildet sein, dass er an dem Material des Volumenkörpers 100 eine Schneidbearbeitung vornehmen kann. Ferner ist denkbar, eine Einrichtung zum punktuellen Aushärten des Materials zum Einwechseln in die Werkzeugaufnahme 8 bereit zu halten, mit der das Material vor einem weiteren Materialauftrag ausgehärtet werden kann. Hierfür kann beispielsweise eine Einrichtung verwendet werden, die Infrarotlicht aussendet. Ferner ist zur genauen Steuerung des Systems auch denkbar, endoskopische Einrichtungen zum Einwechseln in die Werkzeugaufnahme 8 bereitzustellen.

Daneben können als Nachbearbeitungswerkzeuge auch Fräsaggregate, Schleifaggregate oder Bohraggregate vorgesehen sein. Diese wirken dann vorteilhaft mit der Spindeleinheit 7 der Vorrichtung zusammen.

Als entsprechendes Bearbeitungsverfahren ist somit denkbar, dass zunächst mittels der in der Werkzeugaufnahme 8 befindlichen Auftragungseinheit 4 Material zur Ausbildung des Volumenköpers aufgetragen wird. Dann kann die Auftragungseinheit 4 aus der Werkzeugaufnahme 8 ausgewechselt und beispielsweise in dem Werkzeugspeicher abgelegt werden. Danach erfolgt das Aufnehmen eines geeigneten Nachbearbeitungswerkzeugs, um den bestehenden Volumenkörper 100 geeignet nachzubearbeiten. Anschließend wird das Nachbearbeitungswerkzeug wieder aus der Werkzeugaufnahme 8 ausgewechselt und beispielsweise in dem Werkzeugspeicher abgelegt. Damit kann das Wiedereinwechseln der Auftragungseinheit 4 erfolgen, um einen weiteren Materialauftrag am Volumenkörper 100 auszuführen. Alternativ kann freilich auch ein weiteres Nachbearbeitungswerkzeug eingewechselt werden. Durch die erfindungsgemäße Ausgestaltung der Vorrichtung können diese Vorgänge während der Ausbildung des Volumenkörpers wiederholt und rasch vollzogen werden.

Weist der Werkzeugträger eine separate Werkzeugaufnahme für die Nachbearbeitungswerkezuge auf (neben der Werkzeugaufnahme 4 für die Auftragungseinheit), können die auswechselbaren Nachbearbeitungswerkzeuge und die Auftragungseinheit auch gleichzeitig in der Vorrichtung bereitgehalten werden.

Insgesamt wird dadurch deutlich, dass die erfindungsgemäße Vorrichtung 1 eine hochflexible Bearbeitung des Volumenkörpers 100 ermöglicht. Durch die Fünfachsen-Fähigkeit der Vorrichtung 1 kann ein Materialauftrag für die Erstellung des Volumenkörpers 100 auch dann erfolgen, wenn komplexe Geometrien des Volumenkörpers 100 auszubilden sind. Ein Verkippen des Trägers 2 zum Ausbilden von Hinterschneidungen am Volumenkörper 100 ist nicht mehr nötig, wodurch die Steuerung der Vorrichtung vereinfacht wird und gleichzeitig die Verarbeitungspräzision erhöht werden kann.

Obwohl mit der erfindungsgemäßen Vorrichtung freie Formkörper beispielsweise mit Überhängen ausgebildet werden können, die durch bekannte Vorrichtungen nicht oder nur unter großen Schwierigkeiten zu erzeugen sind, stößt die Ausbildung von freitragenden Strukturen dann an ihre Grenzen, wenn extreme Überhänge auszubilden sind, bei denen neues Material nicht mehr ohne weiteres auf bestehende Strukturen, die als eine "Auflagefläche" dienen, aufgebracht werden können. Im Stand der Technik ist dies beispielsweise bereits dann der Fall, wenn der Winkel zum Überhang je nach Art des Verfahrens minimal 45° beträgt. Bei bisherigen Lösungen wurde dazu, d.h. zur Bereitstellung von Ansatzpunkten für den Materialauftrag, zusätzlich Material aufgebacht, dass dann bei der Fertigbearbeitung weggebrochen oder anderweitig entfernt werden musste. Ein solches Vorgehen ist aus mehreren Gründen nachteilhaft. Zum einen ist die Nachbearbeitung zeitaufwändig und mindert unter Umständen die Qualität des fertigen Produkts. Zum anderen ist diese Vorgehensweise natürlich mit zusätzlichem Materialverbrauch und Zeitaufwand beim Drucken verbunden. Bei komplexen Geometrien kann der Zeitbedarf zur Herstellung des Volumenkörpers durchaus das 2-fache der eigentlich notwendigen Zeitdauer betragen (lediglich hinsichtlich des Materialauftrags).

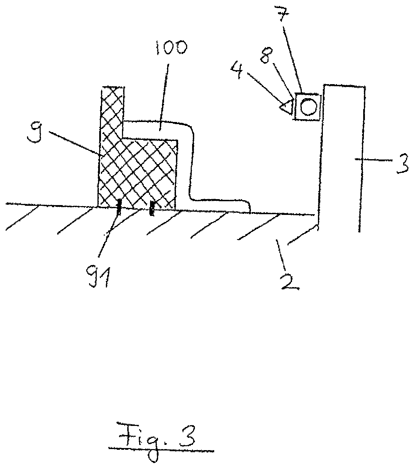

Um die Wirkung der 5-Achs-Fähigkeit in dieser Richtung zu unterstützen, kann in der erfindungsgemäßen Vorrichtung zusätzlich eine Auflagestruktur 9 zum Einsatz kommen. Diese ist in Fig. 3 schematisch dargestellt.

Die Auflagestruktur 9 ist dabei derart ausgelegt, dass sie zumindest Teile des Volumenkörpers 100 beim additiven Materialauftrag abstützt. Dies bedeutet insbesondere, dass die Auflagestruktur 9 eine geeignete Form zur Abstützung des Volumenkörpers 100 aufweist. Beispielsweise ist dies eine Negativform der zu erreichenden Struktur. Alternativ kann die Auflagestruktur 9 auch lediglich Abstützungen zum punktuellen Abstützen des Volumenkörpers 100 umfassen.

Um den modularen Charakter der Vorrichtung 1 zu erhalten, ist dabei bevorzugt, dass die Auflagestruktur 9 lösbar auf dem Träger angeordnet ist und einfach aus diesem ausgewechselt werden kann. Dazu sind beispielsweise in dem Träger 2 und/oder der Auflagestruktur 9 Verbindungseinrichtungen vorgesehen, die ein einfaches Lösen der Auflagestruktur gestatten und gleichzeitig deren exakte Positionierung ermöglichen. Beispielhaft sind in Fig. 3 Stifte 91 gezeigt, die in entsprechenden Ausnehmungen an dem Träger 2 oder der Auflagestruktur 9 angeordnet sind. Alternativ können hierfür beispielsweise auch magnetische Elemente Verwendung finden.

Einwechsel- bzw. auswechselbar heißt dabei insbesondere, dass die Einwechslung bzw. Auswechslung im Maschinentakt, d.h. während des Materialauftrags erfolgen kann, sodass beispielsweise beim Aufbau des Volumenkörper 100 zunächst eine Auflagestruktur 9 bereit gestellt werden kann, die dann an geeigneter Stelle im Verfahrensablauf einfach entfernt werden kann, ohne das Ausbilden des Volumenkörpers 100 zu unterbrechen.

Dieser Vorgang kann gegebenenfalls dadurch begünstigt werden, dass die Auflagestruktur 9 derart ausgebildet ist, dass sie leicht von dem Volumenkörper 100 entformbar ist. Insbesondere kann dies beispielsweise mit einer Antihaftbeschichtung der Auflagestruktur 9 bewerkstelligt werden, die gegenüber dem Material des Volumenkörpers 100 nichthaftende Eigenschaften aufweist. Alternativ kann eine mehrteilige Auflagestruktur verwendet werden, die dadurch eine einfache Entformbarkeit erlangt, dass die Auflagestruktur Stück für Stück entfernt werden kann.

Die Auflagestruktur kann auch als vorgefertigte und wiederverwendbare Konturvorlage dienen, welche den Herstellungsprozess weiter vereinfacht und eine gleichbleibende Produktqualität sicherstellt.

In Figur 4 ist eine Schemadarstellung der Zuführeinrichtung 6 dargestellt, die mit der Düse der Auftragungseinheit 4 in Verbindung steht. Die in Figur 4 dargestellte Zuführeinrichtung weist einen Schneckenförderer 63, einen Zwischenspeicher (Speichereinrichtung) 62, und einen Extruder 64 auf. Wie erwähnt, steht die Zuführeinrichtung 6 mit der Auftragungseinheit 4 in Verbindung, die beispielswiese als formgebende Öffnung direkt am Extruder 64 oder als Düse ausgebildet sein kann. Dabei kann die Auftragungseinheit 4 über einen geeigneten Schlauch 61 (welcher im Folgenden als Teil der Zuführeinrichtung betrachtet wird) mit der Zuführeinrichtung 6 verbunden sein. Auf der in Förderrichtung (siehe Fig. 4) anderen Seite der Auftragungseinheit 4 kann die Zuführeinrichtung mit einem nicht dargestellten Hauptspeicher in Verbindung stehen, der das aufzubringende Material bzw. das entsprechende Rohmaterial in geeigneter Menge bereithält. In dem Hauptspeicher kann ferner eine Aufbereitung des Materials zum Aufbau des Volumenkörpers 100 erfolgen. Dies kann beispielsweise durch Temperierung bzw. oder die Zumischung von weiteren Komponenten, Bindern oder Additiven geschehen.

Die Förderrichtung des Materials entspricht in Figur 4 der Richtung von links nach rechts. Durch den Schneckenförderer 63 kann das Material dann von dem Hauptspeicher zum Zwischenspeicher 62 gefördert werden. Vom Zwischenspeicher 62 kann das Material kann dann zu dem Extruder 64 gelangen, der das Material unter definiertem Druck und bei definierter Temperatur zu einer formgebenden Öffnung fördert und aus dieser drückt. Die formgebende Öffnung Düse fungiert dann als die Düse der Auftragungseinheit 4.

Die Elemente 62-64 können über geeignete Verbindungseinrichtungen 65 verbunden sein, durch die das Material von einem Element zum anderen Element gefördert werden kann. Diese Verbindungseinrichtungen 65 können beispielsweise flexible Schläuche oder auch feste Leitungen sein. Alternativ können die einzelnen Elemente 62-64 auch direkt aneinander angeschlossen sein.

Die Verwendung der Verbindungseinrichtungen 65 hat dabei den Vorteil, dass die Elemente 62-64 flexibel über die Vorrichtung "verteilt" bzw. an dieser befestigt werden können. Dies ist bei der Herstellung von komplexen Volumenkörpern vorteilhaft, da Elemente wie der Schneckenförderer 63, der Zwischenspeicher 62 oder der Extruder 64, die oftmals schwer und voluminös sind, so an der Vorrichtung angeordnet werden können, dass sie die Ausrichtung der Auftragungseinheit 4 in fünf Richtungen möglichst wenig behindern. Werden die Elemente 62-64 derart an der Vorrichtung angebracht, dass sie bei der Ausrichtung des Volumenkörpers unterschiedliche Bewegungen ausführen, d.h. sich relativ zueinander bewegen, können flexible Verbindungselemente wie Schläuche verwendet werden.

Im Hinblick auf die Fünf-Achs-Fähigkeit der Vorrichtung und die Ausbildung von komplexen Volumenkörpern ist es wie erwähnt von Vorteil, gerade schwere Elemente der Zuführeinrichtung 6 so an der Vorrichtung anzuordnen, dass sie bei der Ausrichtung der Auftragungseinheit 4 möglichst wenig bewegt werden müssen. Einerseits erlaubt dies eine präzisere und schnellere Steuerung und Auftragung, da die zu bewegenden Komponenten weniger Gewicht und somit Trägheit aufweisen. Andererseits erlaubt dies, die Mechanik zur Bewegung weniger massiv und damit weniger kostspielig auszuführen. Darüber hinaus wird dadurch ermöglicht, dass die eigentliche Auftragungseinheit, aus der das Material auf den Volumenkörper aufgebracht wird, kompakt ausgeführt werden kann, sodass auch schwer erreichbare Stellen am Volumenkörper zugänglich sind, ohne dass die Auftragungseinheit am Volumenköper "anstößt".

In der in Fig. 2 dargestellten Ausführungsform sind sowohl der Zwischenspeicher 62 als auch der Extruder 64 so an der Vorrichtung angeordnet ist, dass sie beim Ausrichten der Auftragungseinheit lediglich in die drei linearen Richtungen verfahren werden. Die Ausrichtung der Auftragungseinheit um die zwei rotatorischen Achsen erfolgt ohne Mitführung von Zwischenspeicher 62 und Extruder 64. Dies hat den Vorteil, dass einerseits durch das Mitführen von Extruder 64 und Zwischenspeicher 62 entlang der linearen Verfahrwege eine höhere Flexibilität der Vorrichtung erlangt werden kann. Andererseits wird vermieden, dass diese Bauteile durch ihr Gewicht die rotatorische Ausrichtung der Auftragungseinheit 4 beeinträchtigen.

Zwischen dem Extruder 64 und der Düse der Auftragungseinheit kann dann ein flexibler Schlauch 61 angeordnet sein, durch den der Düse das Material vom Extruder 64 zugeführt wird. Zur Materialaufbereitung und zum Sicherstellen der Fließfähigkeit des Materials kann der Schlauch 61 ferner bevorzugt beheizbar ausgeführt sein.

Alternativ kann jedes der Elemente 62-64 auch so an der Vorrichtung angeordnet sein, dass es beim Ausrichten der Auftragungseinheit nur längs des Trägers 2 verfahren wird. Beispielsweise sind die Elemente dann an dem Trägersystem 31 angeordnet.

Der Extruder 64 kann allerdings auch so in der Vorrichtung aufgenommen sein, dass seine formgebende Öffnung direkt in die Auftragungseinheit mündet. Dann ist die formgebende Öffnung des Extruders Teil der Auftragungseinheit 4 und der Extruder wird zusammen mit der Auftragungseinheit bezüglich des Trägers bewegt.

Die Förderung von Material von einem Element 62-64 (insbesondere zwischen Zwischenspeicher 62 und Extruder 64) zum anderen kann unter Ausnutzung der Schwerkraft erfolgen, wenn beispielsweise der Zwischenspeicher 62 in der Vorrichtung höher als der Extruder 64 angeordnet ist. Alternativ dazu kann auch eine nicht gezeigte Pumpe zum Fördern des Materials vorgesehen sein.

Der Hauptspeicher kann bezüglich der Ausrichtung der Auftragungseinheit stationär angeordnet sein und über eine entsprechende Zuführeinrichtung mit der Auftragungseinheit 4 in Verbindung stehen. Dies ist dann von Vorteil, wenn zum Aufbau des Volumenkörpers 100 eine große Materialmenge nötig ist, die in einem entsprechend großen Speicher bereitgehalten werden muss oder umfassende Vorbehandlungsmaßnehmen des Materials mit entsprechenden Einrichtungen (etwa Rühr- oder Temperiervorrichtungen) erforderlich sind. Der Schneckenförderer 63 kann dem Hauptspeicher zugeordnet, also bezogen auf die Ausrichtung der Auftragungseinheit ebenfalls stationär sein.

Die in Figur 4 dargestellte Ausgestaltung der Zuführeinrichtung ist dabei lediglich als beispielhaft zu verstehen. Je nach Materialwahl können beispielsweise der Extruder 64 und/oder der Schneckenförderer 63 und/oder der Zwischenspeicher 62 auch weggelassen werden, und der Düse kann Material ggf. direkt zugeführt werden.

## Patentansprüche

1. Vorrichtung (1) zur Ausbildung von Volumenkörpern (100), insbesondere von Möbelstücken, durch additiven Materialauftrag mit:
einem Träger (2), auf dem der Volumenköper (100) ausgebildet wird;
einer Auftragungseinheit (4), zum Aufbau des Volumenkörpers (100) auf dem Träger (2) durch additiven Auftrag von Material, wobei das Material insbesondere teilweise aus Holzmaterial, wie Holzschaum, Holzmehl, Sägespäne oder Ähnlichem, einer metallischen oder mineralischen Paste, oder Kunststoff ausgebildet ist;
einem Werkzeugträger (3) mit einer Werkzeugaufnahme (8), in der die Auftragungseinheit (4) aufgenommen ist; und
wobei
der Werkzeugträger (3) derart ausgestaltet ist, dass die in der Werkzeugaufnahme (8) aufgenommene Auftragungseinheit (4) durch Verfahren der Werkzeugaufnahme (8) bezogen auf den Träger (2) in fünf Richtungen ausgerichtet werden kann, und
der Werkzeugträger (3) eine Spindeleinheit (7) aufweist und die Werkzeugaufnahme (8) an der Spindeleinheit (7) angeordnet ist, wobei die an der Spindeleinheit angeordnete Werkzeugaufnahme eine Werkzeugaufnahme ist, die derart ausgelegt ist, dass in diese auch andere Bearbeitungswerkzeuge aufgenommen werden können.

2. Vorrichtung zur Ausbildung von Volumenkörpern nach Anspruch 1, bei welcher der Werkzeugträger (3) derart ausgestaltet ist, dass ein Materialauftrag durch die in die Werkzeugaufnahme (8) aufgenommene Auftragungseinheit (4) bezogen auf den auf dem Träger auszubildenden Volumenkörper von allen Seiten her und insbesondere von unten bzw. von schräg unten erfolgen kann.

3. Vorrichtung zur Ausbildung von Volumenkörpern nach einem der vorherigen Ansprüche, bei welcher der Träger (2) in vertikaler Lage fixiert ist.

4. Vorrichtung zur Ausbildung von Volumenkörpern nach einem der vorherigen Ansprüche, bei welcher der Werkzeugträger (3) derart ausgelegt ist dass die in der Werkzeugaufnahme (8) aufgenommene Auftragungseinheit (4) bezogen auf den Träger (2) in drei linearen Richtungen bewegbar ist und in weiteren zwei Richtungen rotatorisch bewegbar ist.

5. Vorrichtung zur Ausbildung von Volumenkörpern nach einem der vorherigen Ansprüche, bei welcher der Werkzeugträger (3) ein kardanischer fünf-Achs-Spindel-Kopf oder ein kartesischer fünf-Achs-Spindel-Kopf ist.

6. Vorrichtung zur Ausbildung von Volumenkörpern nach einem der vorherigen Ansprüche, ferner mit
einer Zuführeinrichtung (6), die zur Zuführung des Materials zur Auftragungseinheit (4) mit der Auftragungseinheit (4) verbunden ist,
wobei die Zuführeinrichtung (6) aufweist:
einen Extruder (64), und/oder
einen insbesondere beheizbaren Schlauch (61).

7. Vorrichtung zur Ausbildung von Volumenkörpern nach Anspruch 6,
wobei die Auftragungseinheit (4) mit dem Extruder (64) über den insbesondere beheizbaren Schlauch (61) verbunden ist.

8. Vorrichtung zur Ausbildung von Volumenkörpern nach einem der vorherigen Ansprüche, bei der
die Auftragungseinheit eine oder mehrere Düsen aufweist.

9. Vorrichtung zur Ausbildung von Volumenkörpern nach einem der vorherigen Ansprüche, bei der
die Auftragungseinheit (4) in die Werkzeugaufnahme (8), insbesondere aus einem Werkzeugspeicher, einwechselbar ist.

10. Vorrichtung zur Ausbildung von Volumenkörpern nach einem der vorherigen Ansprüche, ferner mit:
einem Nachbearbeitungswerkzeug, das in die Werkzeugaufnahme (8), insbesondere aus einem Werkzeugspeicher, einwechselbar ist, wobei
das Nachbearbeitungswerkzeug aus der Gruppe umfassend einen Inkjet-Druckkopf, ein Fräsaggregat, ein Schleifaggregat, einen Laser oder ein Bohraggregat ausgewählt ist.

11. Vorrichtung zur Ausbildung von Volumenkörpern nach einem der vorherigen Ansprüche, ferner mit
einer auf dem Träger angeordneten Auflagestruktur, die derart ausgelegt ist, dass sie zumindest Teile des Volumenkörpers beim additiven Materialauftrag abstützt.

12. Vorrichtung zur Ausbildung von Volumenkörpern nach Anspruch 11, bei der
die Auflagestruktur derart ausgebildet ist, dass sie leicht von dem Volumenkörper entformbar ist.

## Claims

1. Device (1) for forming 3D bodies (100), in particular items of furniture, through additive material application having:
a support (2) on which the 3D body (100) is formed an application unit (4) for building up the 3D body (100) on the support (2) through the additive application of material, wherein the material is in particular at least partially formed of wood material, such as wood foam, wood flour, sawdust or the like, a metallic or mineral paste, or plastic;
a tool carrier (3) with a tool holder (8), in which the application unit (4) is held; and
wherein
the tool carrier (3) is designed such that the application unit (4) held in the tool holder (8) can be oriented in five directions by moving the tool holder (8) in relation to the support (2), and
the tool carrier (3) has a spindle unit (7) and the tool holder (8) is arranged on the spindle unit (7), wherein the tool holder arranged on the spindle unit is a tool holder which is designed such that other processing tools can also be held therein.

2. Device for forming 3D bodies according to claim 1, wherein the tool carrier (3) is designed such that material can be applied by means of the application unit (4) held in the tool holder (8) from all sides and in particular from below or obliquely from below in relation to the 3D body to be formed on the support.

3. Device for forming 3D bodies according to one of the preceding claims, wherein the support (2) is fixed in a vertical position.

4. Device for forming 3D bodies according to one of the preceding claims, wherein the tool carrier (3) is designed such that the application unit (4) held in the tool holder (8) is moveable in three linear directions in relation to the support (2) and is rotationally moveable in a further two directions.

5. Device for forming 3D bodies according to one of the preceding claims, wherein the tool carrier (3) is a cardanic five-axis spindle head or a cartesian five-axis spindle head.

6. Device for forming 3D bodies according to one of the preceding claims, further comprising a feed device (6) which is connected with the application unit (4) in order to feed the material to the application unit (4),
wherein the feed device (6) comprises:
an extruder (64), and/or
an in particular heatable hose (61).

7. Device for forming 3D bodies according to claim 6,
wherein the application unit (4) is connected with the extruder (64) via the in particular heatable hose (61).

8. Device for forming 3D bodies according to one of the preceding claims, wherein the application unit has one or more nozzles.

9. Device for forming 3D bodies according to one of the preceding claims, wherein the application unit (4) can be inserted selectively in the tool holder (8), in particular from a tool magazine.

10. Device for forming 3D bodies according to one of the preceding claims, further comprising:
a finishing tool which can be inserted selectively in the tool holder (8), in particular from a tool magazine, wherein
the finishing tool is selected from the group comprising an inkjet print head, a milling unit, a sanding unit, a laser or a drilling unit.

11. Device for forming 3D bodies according to one of the preceding claims, further comprising a support structure arranged on the support which is designed such that it supports at least parts of the 3D body during the additive material application.

12. Device for forming 3D bodies according to claim 11, wherein
the support structure is designed such that it can readily be released from the 3D body.

## Revendications

1. Dispositif (1) pour former des corps volumiques (100), en particulier des meubles, par l'intermédiaire d'une application additive de matériau, comportant :
un support (2) sur lequel le corps volumique (100) est formé ;
une unité d'application (4), pour réaliser le corps volumique (100) sur le support (2) par application additive de matériau, dans lequel le matériau est formé en particulier partiellement en bois, comme de la mousse de bois, de la farine de bois, de la sciure ou similaire, en une pâte métallique ou minérale, ou en plastique ;
un porte-outil (3) avec un logement d'outil (8) dans lequel l'unité d'application (4) est logée ; et
dans lequel
le porte-outil (3) est configuré de telle sorte que l'unité d'application (4) logée dans le logement d'outil (8) peut être orientée dans cinq directions en déplaçant le logement d'outil (8) par rapport au support (2), et
le porte-outil (3) présente une unité de broche (7) et le logement d'outil (8) est agencé sur l'unité de broche (7), dans lequel le logement d'outil agencé sur l'unité de broche est un logement d'outil conçu de telle sorte que d'autres outils d'usinage peuvent également y être logés.

2. Dispositif pour former des corps volumiques selon la revendication 1, dans lequel le porte-outil (3) est configuré de telle sorte qu'une application de matériau par l'intermédiaire de l'unité d'application (4) logée dans le logement d'outil (8), par rapport au corps volumique à former sur le support, peut intervenir de tous côtés et en particulier par le bas, en biais par le bas.

3. Dispositif pour former des corps volumiques selon l'une quelconque des revendications précédentes, dans lequel le support (2) est fixé dans une position verticale.

4. Dispositif pour former des corps volumiques selon l'une quelconque des revendications précédentes, dans lequel le porte-outil (3) est conçu de telle sorte que l'unité d'application (4) logée dans le logement d'outil (8) peut être déplacée dans trois directions linéaires par rapport au support (2), et peut être déplacée en rotation dans deux directions supplémentaires.

5. Dispositif pour former des corps volumiques selon l'une quelconque des revendications précédentes, dans lequel le porte-outil (3) est une tête de broche à cardan à cinq axes ou une tête de broche cartésienne à cinq axes.

6. Dispositif pour former des corps volumiques selon l'une quelconque des revendications précédentes, comprenant en outre
un dispositif d'alimentation (6) qui est connecté à l'unité d'application (4) pour amener le matériau à l'unité d'application (4),
dans lequel le dispositif d'alimentation (6) présente :
une extrudeuse (64), et/ou
un tuyau pouvant en particulier être chauffé (61).

7. Dispositif pour former des corps volumiques selon la revendication 6,
dans lequel l'unité d'application (4) est connectée avec l'extrudeuse (64) via le tuyau pouvant en particulier être chauffé (61).

8. Dispositif pour former des corps volumiques selon l'une quelconque des revendications précédentes, dans lequel
l'unité d'application présente une ou plusieurs buses.

9. Dispositif pour former des corps volumiques selon l'une quelconque des revendications précédentes, dans lequel
l'unité d'application (4) peut être échangée dans le logement d'outil (8), en particulier à partir d'un dispositif de stockage d'outils.

10. Dispositif pour former des corps volumiques selon l'une quelconque des revendications précédentes, comprenant en outre :
un outil de post-traitement qui peut être échangé dans le logement d'outil (8), en particulier à partir d'un dispositif de stockage d'outils, dans lequel
l'outil de post-traitement est choisi dans le groupe comprenant une tête d'impression à jet d'encre, un groupe de fraisage, un groupe de meulage, un laser ou un groupe de perçage.

11. Dispositif pour former des corps volumiques selon l'une quelconque des revendications précédentes, comprenant en outre
une structure d'appui agencée sur le support, qui est conçue de telle sorte qu'elle supporte au moins des parties du corps volumique lors de l'application additive de matériau.

12. Dispositif pour former des corps volumiques selon la revendication 11, dans lequel
la structure d'appui est formée de manière à pouvoir être facilement démoulée du corps volumique.
